# FASCICULE DE BREVET EUROPEEN

(11) **EP 2 740 039 B1**
(45) Date de publication et mention de la délivrance du brevet: **05.08.2015**
(21) Numéro de dépôt: 12751558.3
(22) Date de dépôt: 24.07.2012
(51) Int. Cl.: G06F 13/00, H04L 12/40

(54) **DISPOSITIF POUR ECHANGER DES DONNEES ENTRE AU MOINS DEUX APPLICATIONS**
VORRICHTUNG ZUM DATENAUSTAUSCH ZWISCHEN MINDESTENS ZWEI ANWENDUNGEN
DEVICE FOR EXCHANGING DATA BETWEEN AT LEAST TWO APPLICATIONS

(30) Priorité: 01.08.2011 FR 1102398
(43) Date de publication de la demande: 11.06.2014
(73) Titulaire: Garnier, Christian, 91580 Etrechy (FR)
(72) Inventeur: Garnier, Christian, 91580 Etrechy (FR)
(74) Mandataire: Flavenot, Bernard
(86) Numéro de dépôt international: PCT/FR2012/000303
(87) Numéro de publication internationale: WO 2013/017744

(56) Documents cités:
- US-A1- 2001 044 912
- US-A1- 2004 064 662
- US-A1- 2009 193 303

## Description

La présente invention concerne les dispositifs pour échanger des données de toutes sortes entre au moins deux applications de quelque nature que ce soit.

Il est déjà connu de tels dispositifs, mais ils présentent des inconvénients qui sont essentiellement : leur manque de rapidité et de déterminisme dans leurs échanges et leur manque de synchronisation.

Il peut être cité à titre d'exemple, les US-A-2004/064662, 2009/193303 et 2001/044912.

Aussi, la présente invention a-t-elle pour but de réaliser un dispositif pour échanger des données entre au moins deux applications, qui réponde à au moins l'une des conditions suivantes :
- permettre une communication à très haut débit entre des modules d'un même composant en offrant, à chaque module, une même probabilité d'accès à un médium ;
- contrôler ce médium de façon déterministe et sûre par la mise en oeuvre d'une MEF (Machine à Etats Finis) gérant les instants d'accès et intégrant nativement une fonction de type "bus guardian" pour surveiller le fonctionnement du dispositif ;
- assurer une communication en sécurité (avec une probabilité d'erreurs inférieure à 10⁻⁹ par heure de fonctionnement) par la mise en oeuvre de mécanismes de détection et de reprise ;
- gérer le transfert de données avec une QOS (Quality of Services) très importante ;
- disposer d'un modèle comportemental permettant de démontrer le niveau de performance du dispositif ;
- disposer d'un modèle de « sûreté de fonctionnement » applicable permettant de garantir le niveau de fonctionnement global du dispositif ;
- permettre une implémentation aisée au niveau microélectronique de par la ségrégation native des fonctions dont l'interconnexion est réalisée par le dispositif.

En outre la structure du dispositif selon l'invention pourra être utilisée par tout composant ayant besoin d'échanger des données, notamment, les utilisateurs potentiels pour assurer la connexion aussi bien entre coeurs de processeurs qu'entre les coeurs de processeurs et les applications extérieures, ou aussi dans des routeurs à très haut débit.

Plus précisément, la présente invention a pour objet un dispositif pour échanger des données entre au moins deux applications consommatrices et/ou émettrices de données, caractérisé par le fait qu'il comporte :
- au moins un premier module et un second module, chaque module comportant des moyens de sortie/entrée aptes à être reliés à une application, chaque module comportant en outre un sous-module de communication interne ayant une fonction émission et un sous-module de communication interne ayant une fonction réception,
- un module de contrôle,
- une horloge de synchronisation du module de contrôle, et
- une ligne de transmission en boucle fermée,
par le fait que :
- chaque sous-module de communication interne ayant une fonction émission comporte :
   * un circuit de machine à états finis (MEF) d'émission comportant des moyens de sortie de demande d'une émission reliés à des moyens d'entrée du dit module de contrôle, des moyens d'entrée de demande d'autorisation d'émission reliés à des moyens de sortie du dit module de contrôle, et
   * un interface de sortie pour les données attachées à l'application qui lui est liée,
   et que :
- chaque sous-module de communication interne ayant une fonction réception comporte :
   * un circuit de machine à états finis de réception comportant des moyens d'entrée de demande de réception pour ce sous-module reliés à des moyens de sortie du dit module de contrôle, et
   * un interface d'entrée pour les données attachées à l'application qui lui est liée,
   et qu'il comporte en outre :
- des moyens pour coupler les deux interfaces de sortie et d'entrée respectivement des sous-modules avec ladite boucle de transmission.

D'autres caractéristiques et avantages de la présente invention apparaîtront au cours de la description suivante donnée en regard des dessins annexés à titre illustratif mais nullement limitatif, dans lesquels :
La figure 1 représente, sous forme d'un bloc-diagramme, le principe de réalisation d'un dispositif selon l'invention pour échanger des données entre au moins deux applications, et
La figure 2 représente un algorithme servant à illustrer un exemple de fonctionnement du dispositif selon l'invention.

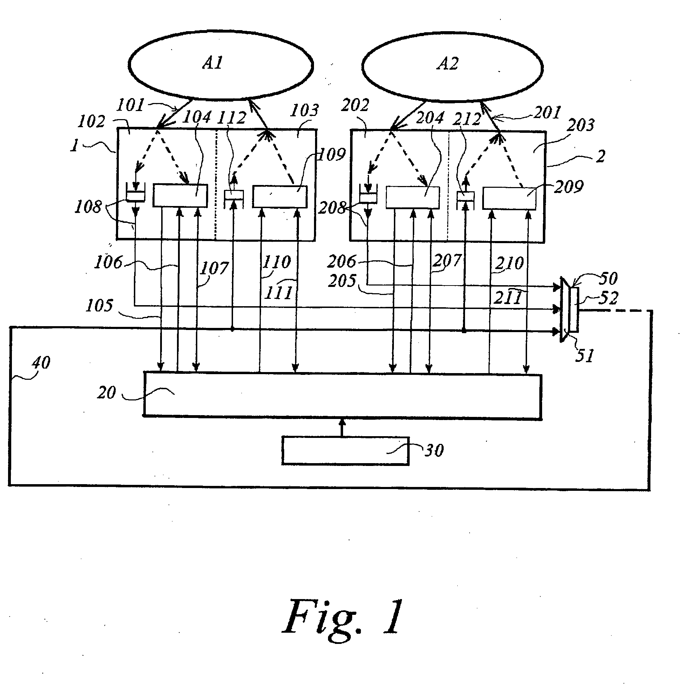

Le dispositif selon l'invention pour échanger des données entre au moins deux applications consommatrice et/ou émettrice de données A1, A2,... par référence à la figure 1, comporte au moins deux premier et second modules 1, 2,..., chaque module comportant des moyens de sortie/entrée 101, 201 aptes à être reliés à une application A1, A2. Chaque module comporte en outre deux sous-modules de communication interne 102, 103 - 202, 203 ayant respectivement une fonction émission 102, 202 et une fonction réception 103, 203.

Le dispositif comporte en outre un module de contrôle 20, une horloge de synchronisation 30 du module de contrôle, et une ligne de transmission en boucle fermée 40.

Chacun des deux sous-modules de communication interne 102, 202 ayant une fonction émission comporte un circuit de machine à états finis MEF d'émission 104, 204 comportant (i) des moyens de sortie de demande d'une émission 105, 205 reliés à des moyens d'entrée du module de contrôle 20, (ii) des moyens d'entrée 106, 206 de demande d'autorisation d'émission reliés à des moyens de sortie du module de contrôle 20, et un interface de sortie 108, 208 pour les données attachées à l'application A1, A2 qui lui est liée.

Quant à chaque sous-module de communication interne 103, 203 ayant une fonction réception, il comporte un circuit de machine à états finis MEF de réception 109, 209 comportant des moyens d'entrée de demande de réception 110, 210 reliés à des moyens de sortie du module de contrôle 20, et un interface d'entrée 112, 212 pour les données attachées à l'application A1, A2 qui lui est liée.

Enfin, dans sa définition première, le dispositif comporte en outre des moyens 50 pour coupler les deux interfaces de sortie 108, 208 et les deux interfaces d'entrée 112, 212 respectivement des sous-modules 102, 202 - 103, 203 avec la boucle de transmission 40.

Selon une réalisation préférentielle, les deux sous-modules de communication interne 102, 202 ayant chacun une fonction émission comportent chacun des moyens d'entrée-sortie de gestion d'erreurs 107, 207 reliés à des moyens d'entrée-sortie du module de contrôle 20 et les deux sous-modules de communication interne 103, 203 ayant une fonction réception comportent chacun des moyens d'entrée-sortie de demande de gestion d'erreurs 111, 211 reliés à des moyens d'entrée-sortie du module de contrôle 20.

En outre, de façon avantageuse, les moyens 50 pour coupler les deux interfaces de sortie 108, 208 et les deux interfaces d'entrée 112, 212 respectivement des sous-modules 102, 202 - 103, 203 avec la boucle de transmission 40 comportent au moins un module de multiplexage 51 associé de façon connue en elle-même à un registre 52. De façon préférentielle, ce multiplexeur 51 est à trois entrées, deux entrées reliées respectivement aux deux interfaces de sortie 108, 208 et aux deux interfaces d'entrée 112, 212, et une autre entrée montée en série dans la boucle de transmission 40.

Quant à la boucle de transmission 40, elle est avantageusement constituée par d'un bus MCI (connu des techniciens sous cette abréviation qui signifie "Moyen de Communication Interne"), et quant au module de contrôle 20, il est de préférence un module de gestion par machine à états finis (MEF).

La mise en oeuvre du dispositif défini ci-dessus est basée sur le fait que la ligne de transmission en boucle fermée 40 a une structure en anneau "pipelinée" (selon la terminologie anglosaxonne "pipelined ring") permettant à tout module 1, 2, ... de diffuser des données sous forme de messages à tous les autres modules.

De ce fait, le module émetteur peut ainsi recevoir les données émises. Cette fonction lui donne la possibilité de vérifier que les données ayant transitées dans la ligne de transmission en boucle fermée 40, ou pipeline, sont bien conformes avec celles émises.

Toute la gestion du dispositif est synchronisée par une horloge unique, ce qui engendre beaucoup d'avantages. En outre, cette horloge est gérée selon l'une des techniques suivantes : technique statique, technique dynamique, combinaison des deux techniques précédentes.

Notamment, une communication synchrone dont le fonctionnement est scalable statiquement par définition de l'horloge de référence du fonctionnement du système et dynamiquement en fonction du volume instantané de données à échanger sur la ligne de transmission permet une gestion fine de la consommation électrique en cas de non utilisation car, seule, la MEF de contrôle fonctionne dans un mode "idle" c'est-à-dire "en attente d'une demande d'émission d'un des modules".

Il est aussi possible de gérer dynamiquement l'horloge de référence en fonction de conditions externes (par exemple pour un processeur alimenté sur batterie, ...).

L'un des avantages présentés par la structure décrite ci-dessus des moyens 50 pour coupler les deux interfaces de sortie 108, 208 et les deux interfaces d'entrée 112, 212 respectivement des sous-modules 102, 202 - 103, 203 avec la boucle de transmission 40 réside dans le fait que, de cette façon, le multiplexeur 51 associé à son registre 52 gère l'émission de deux modules, ce qui engendre un temps de latence réduit au niveau du pipeline 40, du fait notamment de la division par deux du nombre de registres dans le pipeline.

C'est ainsi que le Demandeur a obtenu, pour certaines applications, un débit de 32 Gbits par seconde en utilisant une structure de données de 128 bits à 250 MHz sur une technologie Asic de 130 nm. Sur une technologie plus performante (45nm et en dessous), il est possible d'atteindre des performances largement supérieures à la centaine de Gbits/sec, ce qui peut présenter des avantages majeurs pour la communication, par exemple entre coeurs de processeur, et aussi entre coeurs de processeur et les entrées-sorties d'applications extérieures, ou encore pour les routeurs à très haut débit.

L'utilisation du multiplexeur procure deux avantages majeurs, le premier concerne l'injection du message dans le MCI et le second assure le retrait du message du MCI.

Ainsi, chaque module 1, 2, ... qui émet un message dans le bus MCI 40 relit le message. Cette relecture permet d'alimenter la base de données contenue dans ses couches supérieures et de contrôler la cohérence du message une fois que celui-ci a effectué le tour complet du MCI. Il est à noter qu'à ce stade tous les modules connectés au bus MCI 40 reçoivent le message et peuvent ainsi alimenter la base de données contenue dans leur propre couche supérieure. Ce principe permet de distribuer les données dans chaque module, laissant à chaque module la possibilité d'accepter ou de refuser le message. Ce principe permet de créer une base de données distribuée entre tous les modules interconnectés au MCI avec une garantie de cohérence à la fois temporelle (présence des données au même instant) et spatiale (disponibilité des données pour tous les modules).

L'ensemble du pipeline est piloté par la même horloge. Ceci engendre donc une structure synchrone dans laquelle sont complètement maîtrisés les temps de propagation. Il est ainsi possible de respecter le temps de "set-up" qui correspond au temps minimum à respecter entre le moment où la donnée est présente en entrée du registre et le moment où le front d'horloge permettant le chargement arrive de chaque registre du pipeline ou de chaque entrée de fifo (fifo est en anglais "First In/First Out" soit en français Première entrée/Première sortie), positionnée en entrée du module 1, 2,...

De plus, le principe de gestion du bus MCI mis en oeuvre dans la MEF de contrôle 20 permet d'attribuer le bus MCI à un module suivant le modèle « DTDMA » (Dymanic Time Division Multiple Access en terme anglo-saxons) qui permet une optimisation de la bande passante du MCI 40.

C'est ainsi que la MEF de contrôle 20 attribue le bus MCI aux différents modules qui lui sont connectés suivant une séquence prédéfinie.

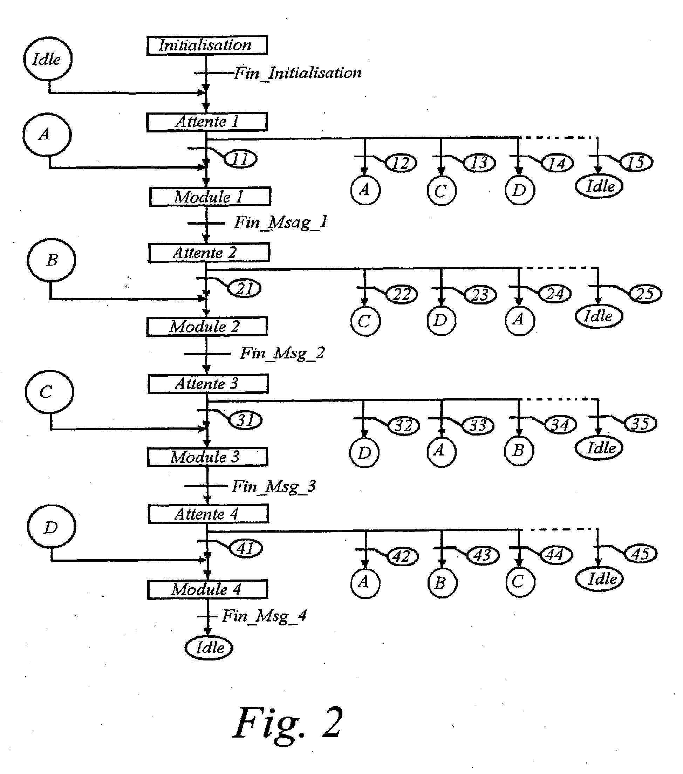

La figure 2 illustre un exemple avec quatre modules 1, 2, 3 et 4, dans laquelle la séquence est la suivante : A → B → C → D → A ...). Seuls les modules qui ont effectué une demande de bus à la MEF de contrôle 20 avant leur tour de parole sont autorisés à émettre un message. Dans le cas contraire, leur tour de parole est supprimé dans la séquence considérée. Le message sera alors émis dans la séquence suivante. Le TABLEAU ci-après présente les conditions de franchissement de la MEF de contrôle 20.

**TABLEAU des Conditions de franchissement :**

| | |
|---|---|
| 11 : M1 | : module 1 autorisé à émettre |
| 12 : !M1 et M2 | : module 2 autorisé à émettre |
| 13 : !M1 et !M2 et M3 | : module 3 autorisé à émettre |
| 14 : !M1 et !M2 et !M3 et M4 | : module 4 autorisé à émettre |
| 15 : !M1 et !M2 et !M3 et !M4 | : retour à la phase attente |
| | |
| 21 : M2 | : module 2 autorisé à émettre |
| 22 : !M2 et M3 | : module 3 autorisé à émettre |
| 23 : !M2 et !M3 et M4 | : module 4 autorisé à émettre |
| 24 : !M2 et !M3 et !M4 et M1 | : module 1 autorisé à émettre |
| 25 : !M1 et !M2 et !M3 et !M4 | : retour à la phase attente |
| | |
| 31 : M3 | : module 3 autorisé à émettre |
| 32 : !M3 et M4 | : module 4 autorisé à émettre |
| 33 : !M3 et !M4 et M1 | : module 1 autorisé à émettre |
| 34 : !M3 et !M4 et !M1 et M2 | : module 2 autorisé à émettre |
| 35 : !M1 et !M2 et !M3 et !M4 | : retour à la phase attente |
| | |
| 41 : M4 | : module 3 autorisé à émettre |
| 42 : !M4 et M1 | : module 4 autorisé à émettre |
| 43 : !M4 et !M1 et M2 | : modula 1 autorisé à émettre |
| 44 : !M4 et !M1 et !M2 et M3 | : module 2 autorisé à émettre |
| 45 : !M1 et !M2 et !M3 et !M4 | : retour à la phase attente |

L'exemple donné ci-dessus d'un fonctionnement possible du dispositif selon l'invention démontre l'intérêt de mettre en oeuvre les conditions de franchissement 15, 25, 35 et 45, ce qui a pour incidence d'injecter une notion de priorité entre les modules liée à la position physique du module dans le bus et donc d'attribuer une probabilité d'accès au bus qui diminue en fonction du numéro du module. Il est à noter que l'indépendance des conditions de franchissement peut permettre pour certaines applications une optimisation du modèle de communication.

Afin de gérer les contraintes liées à la gestion de la sûreté de fonctionnement, chaque module est contrôlé par un signal câblé externe autorisant ou non l'accès au bus MCI 40. Si le signal autorise l'accès, le module pourra accéder au médium. Si le signal invalide l'accès du module au MCI, tous les signaux de demande d'accès à la MEF de contrôle sont forcés en état d'invalidation, ce qui, pour la MEF de Contrôle, revient purement et simplement à supprimer le module dans les algorithmes de gestion.

Les principes mis en oeuvre permettent de calculer le « pire des cas de latence » pour accéder au MCI pour un module en mode opérationnel. Cette propriété est importante car elle permet de dimensionner le système au regard des contraintes opérationnelles. Pour un module, le délai de latence maximum est lié au temps de cycle du bus et au nombre de modules connectés au MCI 40.

Soit :
- Délai de latence = n-1 *: ( Temps ouverture du canal
+ Temps de transmission du message
+ Temps de propagation dans le pipeline
+ Temps de fermeture du canal
+ Temps analyse
)

Avec :
- n : nombre de module connecté au bus MCI 40 ;
- Temps de propagation dans le pipeline = n/2 * 4 ns pour une technologie Asic de 130 nm. Pour des technologies plus fines, le temps de référence diminue sensiblement.

Avec cette équation, il est mis en évidence que, pour des échanges de données (ou messages) de petites tailles, la performance obtenue est liée directement à la performance de la MEF de contrôle. De ce fait, il a été porté un soin particulier à limiter le nombre de coups d'horloge nécessaire à l'ouverture et la fermeture du canal ainsi qu'à l'analyse en fin de transmission.

Comme mentionné ci-avant, il est aussi possible de gérer les éventuelles erreurs, au moyen du module de contrôle 20, comme celui qui a été défini auparavant.

Avec cette structure, c'est-à-dire à contrôle centralisée, le dispositif permet des avantages importants. Notamment, il permet de contrôler les erreurs de transmission, de gérer les erreurs d'émission du module 1, 2, ... à l'origine du message et les erreurs de réception de chaque module à la réception, de gérer les erreurs liées à la gestion du temps d'émission d'un message (détection de message trop court - taille minimum d'un message- ou trop long - taille maximum d'un message), de détecter les pannes latentes.

Notamment, le contrôle des erreurs de transmission est basé sur l'utilisation de deux mécanismes indépendants afin de vérifier la transmission d'un message. Le premier mécanisme utilise la méthode de "Hamming" qui permet de vérifier l'intégrité de chaque donnée élémentaire transmise dans le MCI et de corriger en dynamique une erreur. Le second mécanisme est celui d'un contrôle d'intégrité du message qui est fait grâce à l'utilisation d'un CRC 32 bits associé au message global.

Si donc le message a été transmis correctement (aucune détection d'erreur détectée), la machine de contrôle effectue une demande d'effacement du message dans la file d'émission du module émetteur du message et de décrément du compteur d'erreurs associé au module émetteur et aux modules récepteur d'une valeur unitaire (effectif tant que le compteur n'est pas à 0).

En revanche, si le message a été détecté en erreur, le compteur d'erreurs associé au module ayant détecté l'erreur est incrémenté de huit, les autres compteurs d'erreurs ne sont pas modifiés, le module effectue une réémission immédiate du message. En cas de nouvelle erreur, la réémission du message ne sera effectuée que lors de la prochaine séquence gérée par la MEF de Contrôle 20 afin de ne pas bloquer le MCI 40 avec l'émission continuelle d'un message en erreur.

Dans le cas où un message est détecté en erreur d'émission pendant trois séquences consécutives, un "message d'erreur" est alors généré par la MEF de contrôle 20 avec l'identifiant du message en erreur et le message en erreur est supprimé de la file d'émission au niveau du module considéré.

La centralisation, au niveau de la MEF de Contrôle 20, des erreurs pouvant être détectées soit au niveau du sous-module d'émission 102, 202 par la MEF de contrôle d'émission 104, 204 soit au niveau des sous-modules de réception 103, 203 par la MEF de contrôle de réception 109, 209, permet de gérer les compteurs d'erreur et de demander la réémission du message. La gestion de ces cas d'erreur est la même que celle décrite précédemment.

Le contrôle de la gestion du temps dans le bus MCI 40 est réalisé par une fonction de surveillance du temps d'émission de chaque module 1, 2, .... La surveillance est basée sur le contrôle du temps de parole de chaque module. En cas de non respect du temps de parole, la MEF de contrôle 20 arrête le module considéré : un arrêt de module par ce type d'erreur doit engendrer une réinitialisation de la MEF de contrôle de l'émission du module sans engendrer de perte de message dans la fifo d'émission, augmente de "16" le compteur d'erreurs associé à la fonction d'émission du module, et donne la main au module suivant sans réémission immédiate du message car il faut attendre la fin de réinitialisation de la fonction de contrôle du module d'émission 104, 204. Le message sera donc réémis à la séquence suivante.

Dans le cas où un compteur d'erreur atteint une valeur supérieure ou égale à 256, un "message d'erreur" est généré contenant l'adresse du module ayant généré l'erreur.

Pour le compteur d'erreurs d'émission, une valeur supérieure ou égale à 256 entraîne l'interdiction d'émission du module correspondant.

Pour le compteur d'erreurs de réception : une valeur supérieure ou égale à 256 entraîne la passivation du signal de détection d'erreur vis-à-vis du module de contrôle 20 et interdit toute remontée du message vers les couches supérieures du module considéré.

Pour éviter toute panne latente, un message de vie cyclique est émis au niveau de chaque module 1, 2, .. Ce message correspond au « Statut-du-Module ». Ce message est émis par les couches supérieures.

La détection des pannes latentes passe par la mise en place d'une surveillance de chaque module permettant de démontrer que le module a émis au moins son message "statut" dans la période de temps considérée.

Pour assurer cette détection, un mécanisme de "watch dog" (en français littéralement Chien de garde) est associé à chaque module avec, comme valeur, une valeur légèrement supérieure au temps de cycle du message « statut » du module. Le « watch dog » est réarmé à chaque transmission d'un message par le module.

Avec ce mécanisme de réémission systématique du message de « statut du module », le watch dog associé ne doit jamais tomber.

Néanmoins, si cela venait à arriver, un message d'erreur est alors généré par la MEF de contrôle 20 avec l'adresse du module considéré.

Le module de contrôle du MCI est considéré comme un module particulier disposant d'une fonction « Emi_MCI » et « Rec_EMI » de façon à pouvoir émettre les "messages d'erreur et de statut" et recevoir les commandes de paramétrage.

Il dispose d'un statut dont les bits sont issus de la gestion du bus, de l'état des modules et de sa gestion interne :

Pour chaque module, les bits suivants sont identifiés (d'autres peuvent être utilisés en fonction des applications) :
- Bit de validité du module
- Bit associé à la détection de panne latente
- Bit associé au compteur d'erreur en émission
- Bit associé au compteur d'erreurs en réception
- Bit représentatif du signal d'invalidation physique
- Bit représentatif du signal d'invalidation logique

Ce statut doit aussi être émis de façon cyclique de façon à entretenir la fonction de surveillance système.

De la même manière, la génération des messages d'erreurs dans le dispositif permet de remonter les erreurs aux applications.

## Revendications

1. Dispositif pour échanger des données entre au moins deux applications consommatrice et/ou émettrice de données (A1, A2, ...), **caractérisé par le fait qu'**il comporte :
• au moins deux premier et second modules (1, 2, ...), chaque module comportant des moyens de sortie/entrée (101, 201) aptes à être reliés à une application (A1, A2), chaque module comportant en outre deux sous-modules de communication interne (102, 103 - 202, 203) ayant respectivement une fonction émission (102, 202) et une fonction réception (103, 203),
• un module de contrôle (20),
• une horloge de synchronisation (30) du module de contrôle, et
• une ligne de transmission en boucle fermée (40),
et **par le fait que** :
• chaque sous-module de communication interne ayant une fonction émission (102, 202) comporte :
* un circuit de machine à états finis (MEF) d'émission (104, 204) comportant des moyens de sortie de demande d'une émission (105, 205) reliés à des moyens d'entrée du dit module de contrôle (20), des moyens d'entrée (106, 206) respectivement de demande d'autorisation d'émission reliés à des moyens de sortie du dit module de contrôle (20), et un interface de sortie (108, 208) pour les données attachées à l'application (A1, A2) qui lui est liée,
et que :
• chaque sous-module de communication interne ayant une fonction réception (103, 203) comporte :
* un circuit de machine à états finis (MEF) de réception (109, 209) comportant des moyens d'entrée de demande de réception (110, 210) pour ce sous-module reliés à des moyens de sortie du dit module de contrôle (20), et
* un interface d'entrée (112, 212) pour les données attachées à l'application (A1, A2) qui lui est liée,
et qu'il comporte en outre
• des moyens (50) pour coupler les deux interfaces de sortie (108, 208) et d'entrée (112, 212) respectivement des sous-modules (102, 202, 103, 203) avec ladite boucle de transmission (40).

2. Dispositif selon la revendication 1, **caractérisé par le fait que** les deux sous-modules de communication interne ayant chacun une fonction émission (102, 202) comportent chacun des moyens entrée-sortie de gestion d'erreurs (107, 207) reliés à des moyens d'entrée-sortie du dit module de contrôle (20) et que les deux sous-modules de communication interne ayant chacun une fonction réception (103, 203) comportent chacun des moyens d'entrée-sortie de demande de gestion d'erreurs (111, 211) reliés à des moyens d'entrée-sortie du dit module de contrôle (20).

3. Dispositif selon l'une des revendications 1 et 2, **caractérisé par le fait que** les moyens (50) pour coupler les deux interfaces de sortie (108, 208) et d'entrée (112, 212) respectivement des sous-modules (102, 202, 103, 203) avec ladite boucle de transmission (40) comportent au moins un multiplexeur (51) et un registre (52) associé au multiplexeur.

4. Dispositif selon la revendication 3, **caractérisé par le fait que** ledit multiplexeur est du type à trois entrées, deux entrées reliées respectivement aux deux interfaces de sortie (108, 208) et une autre entrée montée en série dans la boucle de transmission (40).

5. Dispositif selon l'une des revendications précédentes, **caractérisé par le fait que** ladite boucle de transmission (40) est constituée par un bus MCI.

6. Dispositif selon l'une des revendications précédentes, **caractérisé par le fait que** ledit module de contrôle (20) est un module de gestion réalisé à partir de machine à états finis (MEF).

7. Dispositif selon l'une des revendications précédentes, **caractérisé par le fait que** ladite boucle fermée (40) présente une structure en anneau pipelinée.

8. Dispositif selon l'une des revendications précédentes, **caractérisé par le fait que** ladite horloge est gérée selon l'une des techniques suivantes : technique statique, technique dynamique, combinaison des deux techniques précédentes.

## Patentansprüche

1. Vorrichtung zum Austauschen von Daten zwischen wenigstens zwei Daten verbrauchenden und/oder Daten sendenden Anwendungen (A1, A2, ...), **dadurch gekennzeichnet, dass** sie umfasst:
• wenigstens ein erstes und ein zweites Modul (1, 2, ...), wobei jedes Modul Eingabe-/Ausgabemittel (101, 201) umfasst, die mit einer Anwendung (A1, A2) verbunden werden können, wobei jedes Modul außerdem zwei interne Kommunikationsuntermodule (102, 103-202, 203) umfasst, die eine Sendefunktion (102, 202) bzw. eine Empfangsfunktion (103, 203) haben,
• ein Steuermodul (20),
• einen Synchronisationstaktgeber (30) für das Steuermodul und
• eine Übertragungsleitung in geschlossener Schleife (40),
und dadurch, dass:
• jedes interne Kommunikationsuntermodul, das eine Sendefunktion (102, 202) besitzt, umfasst:
* eine Sendeschaltung (104, 204) in Form eines endlichen Automaten (MEF), der Sendeanforderungs-Ausgabemittel (105, 205), die mit Eingabemitteln des Steuermoduls (20) verbunden sind, Sendeautorisierungsanforderungs-Eingabemittel (106, 206), die mit Ausgabemitteln des Steuermoduls (20) verbunden sind, und eine Ausgabeschnittstelle (108, 208) für die an die Anwendung (A1, A2) gebundenen Daten, die mit ihr verbunden ist, umfasst,
und dass:
• jedes interne Kommunikationsuntermodul, das eine Empfangsfunktion (103, 203) besitzt, umfasst
* eine Empfangsschaltung (109, 209) in Form eines endlichen Automaten (MEF), die Empfangsanforderungs-Eingabemittel (110, 210) für dieses Untermodul, die mit Ausgabemitteln des Steuermoduls (20) verbunden sind, umfasst, und
* eine Eingabeschnittstelle (112, 212) für die an die Anwendung (A1, A2) gebundenen Daten, die mit ihr verbunden ist, und
dass sie außerdem umfasst:
• Mittel (50) zum Koppeln der Ausgangsschnittstelle (108, 208) und der Eingangsschnittstelle (112, 212) der jeweiligen Untermodule (102, 202, 103, 203) mit der Übertragungsschleife (40).

2. Vorrichtung nach Anspruch 1, **dadurch gekennzeichnet, dass** die zwei internen Kommunikationsuntermodule, die jeweils eine Sendefunktion (102, 202) haben, jeweils Fehlermanagement-Eingabe/Ausgabe-Mittel (107, 207) besitzen, die mit den Eingabe- und Ausgabemitteln des Steuermoduls (20) verbunden sind, und dass die zwei internen Kommunikationsuntermodule, die jeweils eine Empfangsfunktion (103, 203) besitzen, jeweils Fehlermanagementanforderungs-Eingabe/Ausgabemittel (111, 211) umfassen, die mit den Eingabe- und Ausgabemitteln des Steuermoduls (20) verbunden sind.

3. Vorrichtung nach einem der Ansprüche 1 und 2, **dadurch gekennzeichnet, dass** die Mittel (50) zum Koppeln der Ausgabeschnittstelle (108, 208) und der Eingabeschnittstelle (112, 212) der jeweiligen Untermodule (102, 202, 103, 203) mit der Übertragungsschleife (40) wenigstens einen Multiplexer (51) und ein dem Multiplexer zugeordnetes Register (52) umfassen.

4. Vorrichtung nach Anspruch 3, **dadurch gekennzeichnet, dass** der Multiplexer vom Typ mit drei Eingängen ist, wobei zwei Eingänge mit jeweils einer der beiden Ausgabeschnittstellen (108, 208) verbunden sind und ein weiterer Ausgang in der Übertragungsschleife (40) in Reihe geschaltet ist.

5. Vorrichtung nach einem der vorhergehenden Ansprüche, **dadurch gekennzeichnet, dass** die Übertragungsschleife (40) durch einen MCI-Bus gebildet ist.

6. Vorrichtung nach einem der vorhergehenden Ansprüche, **dadurch gekennzeichnet, dass** das Steuermodul (20) ein Management-Modul ist, das anhand eines endlichen Automaten (MEF) verwirklicht ist.

7. Vorrichtung nach einem der vorhergehenden Ansprüche, **dadurch gekennzeichnet, dass** die geschlossene Schleife (40) ein Pipeline-Ringstruktur hat.

8. Vorrichtung nach einem der vorhergehenden Ansprüche, **dadurch gekennzeichnet, dass** der Taktgeber gemäß einer der folgenden Techniken gesteuert wird: statische Technik, dynamische Technik, Kombination der zwei vorhergehenden Techniken.

## Claims

1. A device for exchanging data between at least two data consuming and/or emitting applications (A1, A2, ...), the device being **characterized by** the fact that it comprises:
· at least first and second modules (1, 2, ...), each module having I/O means (101, 201) suitable for being connected to an application (A1, A2), each module also having two internal communication submodules (102, 103 - 202, 203) having respectively an emission function (102, 202) and a reception function (103, 203);
· a control module (20);
· a clock (30) for synchronizing the control module; and
· a closed-loop transmission line (40);
and by the fact that:
· each internal communication submodule (102, 202) having an emission function comprises:
· an emission finite state machine (FSM) circuit (104, 204) comprising means (105, 205) for outputting an emission request, which means are connected to input means of said control module (20), emission authorization request input means (106, 206) respectively connected to output means of said control module (20), and an output interface (108, 208) for the data associated with the application (A1, A2) that is linked thereto;
and that:
· each internal communication submodule having a reception function (103, 203) comprises:
· a reception finite state machine (FSM) circuit (109, 209) comprising reception request input means (110, 210) for the submodule connected to output means of said control module (20); and
· an input interface (112, 212) for the data associated with the application (A1, A2) that is linked therewith;
and that it further comprises:
· means (50) for coupling the two input and output interfaces (108, 208 - 112, 212) respectively of the submodules (102, 202, 103, 203) with said transmission loop (40).

2. A device according to claim 1, **characterized by** the fact that each of the two internal communication submodules (102, 202) having an emission function comprises error management I/O means (107, 207) connected to I/O means of said control module (20) and that each of the two internal communication submodules (103, 203) having a reception function comprises error management request I/O means (111, 211) connected to I/O means of said control module (20).

3. A device according to claim 1 or claim 2, **characterized by** the fact that the means (50) for coupling the two input and output interfaces (108, 208 - 112, 212) respectively of the submodules (102, 202, 103, 203) with said transmission loop (40) comprise at least one multiplexer (51) and a register (52) associated with the multiplexer.

4. A device according to claim 3, **characterized by** the fact that said multiplexer is of the type having three inputs, two inputs connected respectively to the two output interfaces (108, 208), and another input connected in series in the transmission loop (40).

5. A device according to any preceding claim, **characterized by** the fact that said transmission loop (40) is constituted by an ICM bus.

6. A device according to any preceding claim, **characterized by** the fact that said control module (20) is a management module made using a finite state machine (FSM).

7. A device according to any preceding claim, **characterized by** the fact that said closed loop (40) presents a pipelined ring structure.

8. A device according to any preceding claim, **characterized by** the fact that said clock is managed using one of the following techniques: static technique; dynamic technique; a combination of the two preceding techniques.
